## Europäisches Patentamt

## European Patent Office

## Office européen des brevets

(11) Publication number: **0 244 450**
**B1**

(12) EUROPEAN PATENT SPECIFICATION

(45) Date of publication of patent specification: **25.07.90**

(21) Application number: **86906314.9**

(22) Date of filing: **20.10.86**

(51) Int. Cl.⁵: **B 26 D 5/12**

(86) International application number:
**PCT/EP86/00596**

(87) International publication number:
**WO 87/02295 23.04.87 Gazette 87/09**

㊽ Consolidated with 86202028.6/0235403
(European application No./publication No.) by
decision dated 08.03.89.

(54) **PORTABLE OPERATING APPARATUS WITH INTERCHANGEABLE HEADS.**

(30) Priority: **18.10.85 IT 8255185**

(43) Date of publication of application:
**11.11.87 Bulletin 87/46**

(45) Publication of the grant of the patent:
**25.07.90 Bulletin 90/30**

(84) Designated Contracting States:
**AT BE CH DE ES FR GB GR IT LI LU NL SE**

(56) References cited:
CH-A- 384 501          FR-A-2 500 344
DE-A-1 627 140       GB-A- 850 248
DE-U-8 121 716       GB-A-2 132 298
FR-A-2 091 669       US-A-2 241 089
FR-A-2 199 672       US-A-4 506 445
FR-A-2 426 174

Ölhydraulik und Pneumatik-Report, 1984,
(Mainz, DE), "5 to Pressfraft mit einer Hand",
siehe Seite 80

(73) Proprietor: **CITTON, Gianni**
**Via Piovego 8**
**I-31030 Borso del Grappa (IT)**

(72) Inventor: **CITTON, Gianni**
**Via Piovego 8**
**I-31030 Borso del Grappa (IT)**

(74) Representative: **Piovesana, Paolo**
**Corso del Popolo, 70**
**I-30172 Venezia-Mestre (IT)**

Courier Press, Leamington Spa, England.

## Description

The present invention relates to a portable operating apparatus with interchangeable heads.

The known operating machines, such as shears, bar benders, cutting machines and so on, consist of a unit comprising an electrical or internal combustion motor driving an oil pump which causes the displacement of a piston operating a tool.

According to the requirements, there are cutting machines, bending machines, shearing machines, drilling machines.

These known operating machines indeed present some drawbacks, and in particular:

the possibility to carry out only the function for which they have been planned and realized, with the consequent necessity of having as many different machines as the workings have to be carried out,

a high cost of investment that this lot of machines requires.

CH—A—384 501 describes a portable multi-role operating apparatus according to the preamble of claim 1.

However this apparatus presents the drawbacks of not enabling to quickly bind the flanges in facing conditions and easily replace the operating heads.

This drawbacks is eliminated according to the invention for such a portable multi-role operating apparatus by the features of the characterising part of claim 1.

A perferred embodiment of the present invention is described in detail hereinafter with reference to the accompanying drawings in which:

Figure 1 is a perspective view of a basic unit according to the invention provided with a shearing head,

Figure 2 is an enlarged longitudinal section view thereof,

Figure 3 is an enlarged sectional partial view of the pump,

Figure 4 is a detailed enlarged view of the head of the piston,

Figure 5 is a plan view of the shearing head,

Figure 6 is a plan view of a first embodiment of a bending head,

Figure 7 is a lateral view thereof,

Figure 8 is a plan view of a second embodiment of a bending head,

Figure 9 is a plan view of a snips head with coplanar blades,

Figure 10 is a partly fragmented plan view of a snips head having blades scissor-operable,

Figure 11 is a lateral view of a punching head, and

Figure 12 is a plan view of a divaricating head.

As can be seen from the figures the portable operating apparatus according to the invention substantially comprises a body 1 provided with handle 2, and having at one end an electrical motor 3 and at the other end a flange 4 supporting the heads.

The body 1 comprises an upper tank 5 for the fluid, communicating with a cylindric hollow 6, in which a piston pump 7 is housed.

In particular the pump 7 comprises a three-lobes 10 body having a middle cylindric hollow 8, at which cylindric radial seats 9 end up, foreseen in the three lobes 10. Inside each cylindric seat 9, which is crossed by a groove 12 transversely made in the corresponding lobe 10, an axially displaceable little piston 11 is housed.

At the outer end of each cylindric seat 9, beyond the corresponding groove 12, holes 13 are foreseen. Ducts 13 end up at these holes 13 connecting the seat 9 with the front surface of the pump (at the right hand in figure 2).

The ducts 14 are provided with non-return valves (not shown in the drawings) to allow the unidirectional flow of the fluid pumped by the pistons 11.

Each piston 11 is kept with its inner end projecting inside the cylindric hollow 8 and is also elastically kept into touch with a common annular element 15 having diameter less than the diameter of the hollow 8 and housed inside this.

An eccentric pin 16 bound to the shaft of the motor 3, is engaged within the annular element 15. To said shaft also a traditional cooling fan 17 is applied.

Furthermore a cylindric chamber 18 is foreseen inside the body 1, coaxially with the pump 7. Within said chamber the head of a piston 19 is displaceable, having the rod 20 which comes out from the flange 4.

In the body 1, outwardly the cylindric chamber 18, a longitudinal duct 21 is foreseen, connecting the tank 5 with the chamber 18 downstream the head of the piston 19 through a short radial duct 22.

Furthermore in the body 1, outwardly at the chamber 18, a cylindric seat 23 is foreseen housing a safety-valve. This valve comprise a point-shaped stem 25, pushed by a solenoidal spring 26 to close a duct 28 connecting the seat 23 with the chamber 18 upstream the head of the piston 19.

The elastic reaction of the spring 26 is adjusted by a bush 26 screwed in a corresponding threaded portion of the seat 23.

A short radial duct 24, foreseen in the body 1 outwardly the chamber 18, connects the seat 23 with the chamber 18 downstream the head of the piston 19.

Furthermore in the rear wall of the chamber 18, ducts 29 are foreseen, coaxially extending from the ducts 14 of the pump 7.

Finally in the body 1, outwardly at the chamber 18, a further duct 30 is foreseen, connecting this chamber with the tank 5 through a valve 31, which in the illustrated embodiment is handly-actuable by the user.

The head of the piston 19 is provided with a mushroom-shaped valve 32, having its head 33 facing two passing holes 34 made in the same head of the piston 19. A solenoidal spring 35 keeps elsatically spaced apart said head 33 from the head of the piston 19.

A further solenoidal spring 36 is foreseen around to the rod 20 of the piston 19.

The flange 4 has the central hole, through which the rod 20 passes, provided with a longitudinal groove guiding a spline 38 applied to said rod 20, which therefore can axially be displaced but cannot rotate around its longitudinal axis.

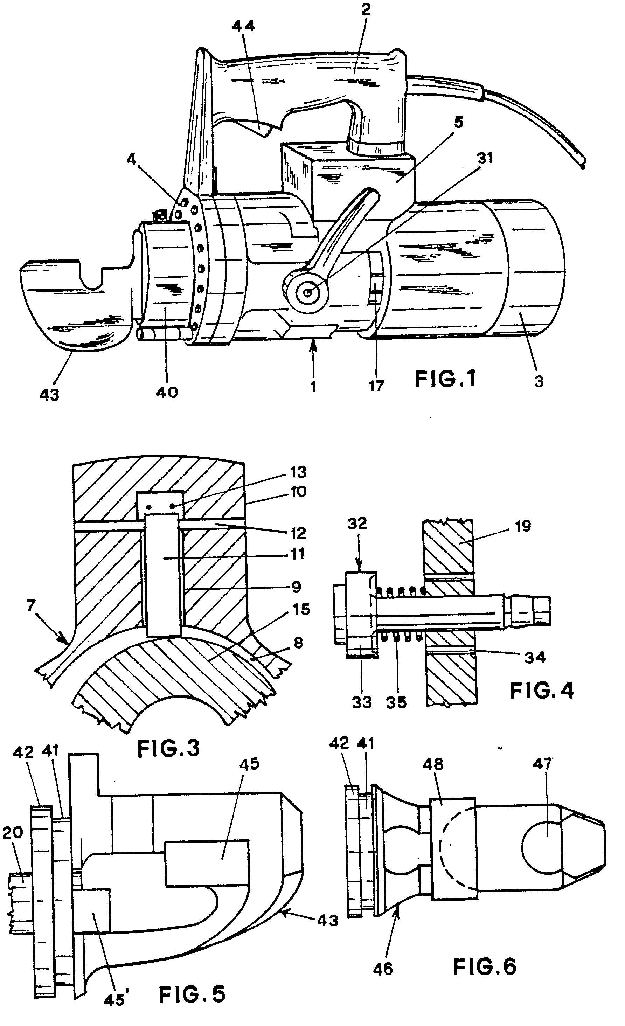

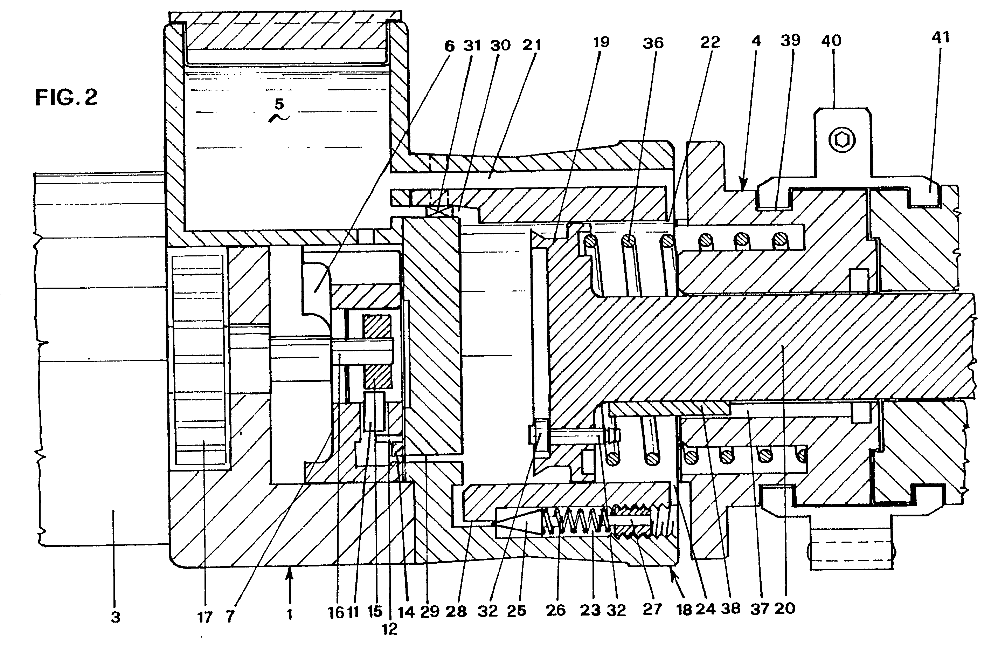

The outer side surface of the flange 4 is provided with a perimetric groove 39, to be engaged by a corresponding edge of a removable ring 40. This ring consists of two portions hinged at one end and provided with mutual bond means at the other end. The other edge of the ring 40 is engageable with a corresponding groove 41 foreseen in the flange 42 of the head of the tool, and in particular on the shearing head in figure 5.

The portable apparatus according to the invention operates as follows:

in rest condition the solenoidal spring 36 keeps the head of the piston 19 adhering to the rear wall of the cylindric chamber 18, so that the head of the valve 32 adheres to the head of the piston 19 and closes the holes 34.

In this condition the solenoidal spring 26 keeps the stem 25 of the safety-valve in closing the duct 28. When the user actuated a trigger 44 foreseen in the handle 2 thus causing the electrical motor 3 to start, the rotation of the eccentric 16 causes, through the annular element 15, the reciprocal movement of the piston 11 inside the respective seats 9. In this way the oil which comes from the tank 5 and practically fills all the inner hollows of the pump 7, and in particular the grooves 12, is pumped from the pistons 11 through the ducts 14 and 29 to the cylindric chamber 18.

The continuous flow of oil inside this chamber 18 causes the displacement of the piston 19 and the consequent outcoming of its rod 20, which in this way can drive the operating head coupled to it. In the embodiment shown in Figures 1 and 5, a movable blade 45' cooperating with the fixed blade 45 of the shearing head 43 is applied to the rod 20 of the piston 19.

Furthermore the oil pressure against the head of the piston 19 keeps the head 33 of the mushroom-shaped valve 32 adhering to the head of the piston 19.

During the outcoming of the rod 20, the oil downstream the head of the piston 19 is discharged, through the ducts 22 and 21, into the tank 5.

When the piston 19 has reached its front end-of-travel condition, and consequently the tool has completed its active stroke, the stem of the valve 32 interacts with the front wall of the chamber 18 axially displacing backward the same valve 32 and removing its head from the head of the piston 19, thus opening the holes 34. In this way the oil further entering into the chamber 18 passes through these holes 34 and returns, through the duct 21, into the tank 5.

At this moment the user, releasing the gripper 44, halts the electric motor 3, and stops the feeding of oil inside the chamber 18. Since the holes 34 are open during this phase, after a short time the pressures downstream and upstream the head of the piston 19 become equal and the elastic reaction of the spring 36, previously compressed, prevails causing the return stroke of the piston 19.

In the case in which, for example during the shearing of a very hard piece, the outcoming of the piston 19 should be impeded, thus strongly increasing the pressure inside the chamber 18, the safety-valve 25 intervenes. Indeed the high pressure upstream the piston 19 prevails on the elastic reaction of the solenoidal spring 26 and causes the back displacement of the stem 25 and the opening of the duct 28.

In this way the oil enters the seat 23, passes through the bush 27 and enters the chamber 18, downstream the head of the piston 19, returning into the tank 5 through the duct 21.

If the return stroke of the piston before reaching the front end-of-travel position is required, it is sufficient to stop the motor 3 and to handly open the valve 31. In this way the oil housed inside the chamber 18 can return into the tank 5 through the duct 30.

In order to use the portable apparatus according to the invention with a different operating head, the user disengages the portions of the ring 40, takes away the shearing head 43 and replaces it with another one fit to carry out the new function.

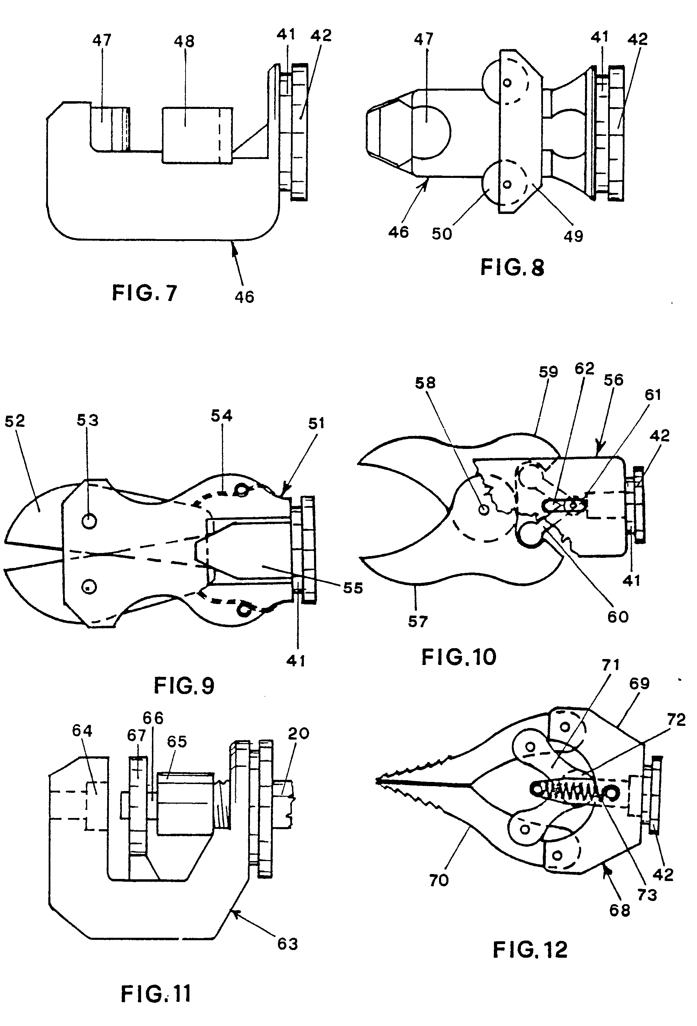

In the figures 6 and 7 a bending head is shown, to which a semicylindric mould 47 is bound, complementary to a movable U-shaped counter-mould 48, actuated by the rod 20 of the piston 19. It is clear that, during the actuating of the apparatus and therefore during the advancement of the counter-mould 48 towards the mould 47, the bending of a metal bar interplaced between them is caused.

In the figure 8 a second embodiment of a bending head is shown in which the movable counter-mould 49 is provided with a pair of rollers 50, allowing to carry out the soft bending of the metal bar, without any stretching.

In Figure 9 a snips head 51 is shown having coplanar blades 52. These blades are articulated to two pins 53 and are kept in open condition by the elastic reaction of two springs 54. A wedge 55 is placed between the arms of the blades 52, beyond their articulation pins 53.

While operating, the advancement of the rod 20 causes the displacement of the wedge 55 and the divarication of the arms with the consequent rotation and closure of the blades 52.

Due to the springs 54, which ensure the elastic return of the blades to the open condition when the rod 20 goes back inside the operating unit, no connection is necessary between the rod 20 and the wedge 55, but only a simple rest which makes easier and quicker the engagement between the head and the operating unit.

In Figure 10 a snips head 56 is shown having the blades 57 scissors-actuable.

The blades 57 are articulated to a pin 58 and two pushers 60 are toggle-articulated to the arms 59 of said blades and to a block 61, which is obliged to move along two longitudinal holes 62 made in the body or the head 56. While operating, the head of the rod 20 is rested against the block 61 which, owing to the outcoming of the rod, is axially displaced and causes the rotation to the close condition of the blades 57.

In Figure 11 a punching head 63 is shown comprising a die 64 to be applied to the flange 4 of the operating unit, and a spindle 65 screwing the punch 66 to the rod. An extracter member 67 bound to the die 64 holds the metal sheet placed between said die 64 and the punch 66 during the return-stroke of this punch.

In Figure 12 a divaricating head 68 is shown comprising a body to be applied to the flange 4 and a pair of divaricating arms 70 articulated to the body 6. Two smaller arms 71 are furthermore articulated to these arms 70 even articulated to each other and to an actuating middle block 72, against which the end of the rod 20 rests. A pair of traction-operating solenoidal springs 73 keep both the two arms 70 in approached condition. In operating, the axial advancement of the rod 20 causes the forward displacement of the block 72 which, overcoming the elastic reaction of the springs 73 pushes the arms 71 to divaricate the two arms 70.

When the rod 20 goes back, the springs 73 bring the arm 70 in approached condition.

In the shown embodiment, it has been referred to an apparatus provided with a simple-acting cylinder, in which the active stroke of the piston 19 occurs during the inlet of the oil inside the chamber 18, whereas the return stroke is obtained through the elastic reaction of the spring 36 compressed during the active stroke.

It is indeed foreseeable an embodiment with a double-acting cylinder, in which both the strokes are controlled by the oil.

This embodiment, which is not shown in the drawings, obviously requires a suitable distribution system which selectively allows the feeding of the oil inside the chamber 18 downstream and upstream the piston 19, but all this is well known to the skilled man and therefore doesn't require any further information.

Obviously in the case of a double-acting cylinder it is not possible to keep the connection between the end of the rod 20 and the corresponding portion of the operating head by a simple rest, but it is necessary to replace it with a steady connection, for example obtainable by screwing.

It is clear that in this case the springs, ensuring the elastic return to the rear condition of the movable parts of the operating heads, are not be necessary.

In the shown embodiment a handly-actuable valve 31 has been described, but it is also foreseeable an embodiment with an electro-valve controlled by the same trigger 44 actuating the electric motor 3. In this case, when the user stops the motor 3, whatever is the position of the piston 9 coming out from the flange, the electrovalve 31 intervenes and controls the discharge of the oil into the tank 5 allowing the piston 19 to return to its rest position, even if the front end-of-travel condition has not been reached.

Finally the motor 3 driving the pump 7 has been illustrated as an electric motor, but it could be of another kind, particularly an internal combustion one, advantageously usable in all the cases in which the electric energy is not available or usable.

## Claims

1. A portable multi-role operating apparatus, with a basic unit including, inside a body (1) provided with a handle (2),:
   a motor (3),
   a hydraulic pump (7) driven by said motor (3),
   a cylinder-piston unit (18, 19) connected to said pump (7) through at least a duct (14, 29) for unidirectional feeding the fluid, the rod (20) of the piston (19) coming out from said body (1),
   a tank (5) for feeding the fluid to the pump,
   at least a duct (30) directly connecting said cylinder (18) to said tank (5), provided with a valve (31) actuable from outside,
   a plurality of interchangeable operating heads (43, 46, 51, 56, 63, 68), each of them formed by a support structure, provided with a flange (42) engageable with a similar connection flange (4) foreseen in said body (1) and encircling the passage opening of said rod (20), and an active part, movable with respect to said support structure and actuable by said rod (20),
   characterised in that it comprises an annular element (40) formed of at least two separate portions mutually engageable and provided with edges which are simultaneously engageable with corresponding grooves of the two flanges (4, 42) respectively foreseen in the body (1) and in the operating heads (43, 46, 51, 56, 63, 68).

2. Apparatus as claimed in claim 1 characterised in that the operating head consists of a shearing head having a blade (45) bound to the portion of the head provided with the flange (42) and a movable blade (45') bound to the rod (20) of the piston (19).

3. Apparatus as claimed in claim 1 characterised in that the operating head consists of a bending head (46) having a fixed mould (47) bound to the portion of the head provided with the flange (42) and a counter-mould (48) movable along said portion and bound to the rod (20) of the piston (19).

4. Apparatus as claimed in claim 1 characterised in that the operating head consists of a bending head (46) having a fixed counter-mould bound to the portion of the head provided with the flange (42) and a mould movable along said portion and bound to the rod (20) of the piston (19).

5. Apparatus as claimed in claims 3 and 4 characterised in that the counter-mould (48) of the bending head is provided with bending rollers (50).

6. Apparatus as claimed in claim 1 characterised in that the operating head consists of a snips head (51) having the blades (52) coplanar and articulated to two pins (53), a divaricating wedge (55) being placed between the arms of said blades (52) and actuable by the rod (20) so that to cause the closure of the blades (52).

7. Apparatus as claimed in claim 1 characterised in that the operating head consists of a snips head (56) with the blades (57) articulated to one pin (58) and connected to a pair of arms (59) which are simultaneously actuable by the rod (20) so that to cause the scissors closure of the blades (57).

8. Apparatus as claimed in claim 1 characterised in that the operating head consists of a punching head (63), with its die (64) connected to the flange (42) and provided with an extractor member (67), and a punch (66) bound to the rod (20).

9. Apparatus as claimed in claim 1 characterised in that the operating head consists of a divaricating head (68), huving a body (69) connected to the flange (42) and a pair of divaricating arms (70) articulated to said body and articulated to a further pair of arms (71) which are simultaneously actuable by the rod (20) so that to cause the opening of said arms (71).

10. Apparatus as claimed in claim 1 characterised in that the connection between the rod (20) and the movable part of the operating head (43, 46, 51, 56, 63, 68) is obtained by their direct contact, the active stroke of said movable part being obtained by the displacement of the piston and the return stroke being obtained by elastic means.

11. Apparatus as claimed in claim 1 characterised in that the movable part of the operating head is steady connected to the rod (20) which with its displacements causes both the active and the return stroke of said movable part.

12. Apparatus as claimed in claim 11 characterised in that the movable part of the operating head is screwed on to the rod (20).

13. Apparatus as claimed in claim 10 characterised in that the cylinder-piston system (18, 19) is a single-acting system and is provided with elastic means (3) which when the pump (7) is not actuated, keep the piston (19) in rest end-of-travel condition.

14. Apparatus as claimed in claim 13 characterised in that the head of the piston (19) is provided with at least a passing hole (34) closeable by a valve (32), elastically kept in open condition when no other external stresses occur, and kept in close condition when the piston (19) is in its rear end-of-travel condition and/or when the pressure in the chamber (18) upstream the piston (19) overcomes of a prefixed value the pressure in the chamber (18) downstream the piston (19).

15. Apparatus as claimed in claim 14 characterised in that the valve (32) is a mushroom-shaped valve, with its head facing the passing holes (34) housed in the zone of the chamber (18) upstream the piston (19) and with its stem having length higher than the thickness of the head of the piston (19), said valve (32) being provided with a spring (35) which causes the opening of the passing hole (34) when the spring is in its rest condition.

16. Apparatus as claimed in claim 13 characterised in that the cylinder-piston (18, 19) system is provided with a safety-valve (25, 26, 27) closing a duct (28) connecting the two zones of the chamber (18) upstream and downstream the piston (19) and acting so that to prevent the passage of the oil from downstream to upstream, but to allow the opposite passage when a prefixed value of the difference of pressures is overcome.

17. Apparatus as claimed in claim 16 characterised in that the safety-valve comprises in stem (825) elastically kept by a spring (26) in closure condition of the duct (28).

**Patentansprüche**

1. Tragbare multifunktionale Operationsapparatur mit einer Basiseinheit einschliesslich, in einem mit Griff (2) ausgestatteten einzigen Gehäuse (1),
einem Motor (3),
einer von erwähntem Motor (3) angetriebene Hydraulikpumpe (7),
einem Zylinderkolbenaggregat (18, 19), verbunden mit der erwähnten Pumpe (7) mittels wenigstens einer Leitung (14, 29) zur eindirektionalen Zuführung der Betriebsflüssigkeit, der aus dem erwähntem Gehäuse (1) austretenden Kolbenstange (20, 19),
einen Tank (5) für die Versorgung der Pumpe mit Betriebsflüssigkeit,
wenigstens einer Direktverbindungsleitung (30) zwischen erwähntem Zylinder (18) und erwähntem Tank (5), ausgestattet mit einem von aussen betätigbaren Sperrventil (31),
einer Vielfalt von auswechselbaren Arbeitsköpfen (43, 46, 51, 56, 63, 68), jeder davon gebildet von einer Halterung, ausgestattet mit einer Flansch (42), die an eine ähnliche Flansch (4) des Gehäuse 1 kuppelbar ist und die Durchgangsöffnung der erwähnten Stange (20) umschliesst und einem aktiven Teil, beweglich hinsichtlich der erwähnten Halterung und betätigt von erwähnter Stange (20),
dadurch gekennzeichnet, daß sie ein Ringelement (40) umfasst, das aus wenigstens zwei getrennten Teilen besteht, die reziprok ineinander greifen, und die ausgestattet sind mit kanten, die gleichzeitig mit korrespondierenden Nüte der beiden Flänsche (4, 42) ineinander greifen, entsprechend vorgesehen im Gehäuse (1) und in den Arbeitsköpfen (43, 46, 51, 56, 63, 68).

2. Apparatur nach Anspruch 1 dadurch gekennzeichnet, daß der Arbeitskopf aus einem Schneidepresskopf mit einem fixierten Messer (45) besteht, fest um mit einer Flansch (42) ausgestatteten Teil des Kopfes und mit einem beweglichen Messer (45'), fest an der Kolbenstange (20, 9).

3. Apparatur nach Anspruch 1 dadurch gekennzeichnet, daß der Arbeitskopf aus einem Biegekopf (46) mit einer festen Matrize (47), fest an dem mit einer Flansch (42) ausgestatteten Kopfteil und mit einer Gegenmatrize (48), beweglich entlang erwähntem Teil und fest an der Kolbenstange (20, 19), besteht.

4. Apparatur nach Anspruch 1 dadurch gekennzeichnet, daß der Arbeitskopf aus einem Biegekopf (46) mit fixierter Gegenmatrize (47), fest and dem mit einer Flansch (42) ausgestatteten Kopfteil und mit einer Matrize (48), beweglich entlang erwähntem Teil und fest an der Kolbenstange (20, 19), besteht.

5. Apparatur nach Anspruch 3 oder 4 dadurch gekennzeichnet, daß die Gegenmatrize (48) des Biegekopfes (46) ausgestattet ist mit Biegerollen (50).

6. Apparatur nach Anspruch 1 dadurch gekennzeichnet, daß der Arbeitskopf aus einer Schere (51) mit koplanaren Messern (52) besteht, angelenkt an zwei Bolzen, und zwischen der Armen der erwähnten Messer (52) ein von erwähnter Stange (20) betätigter Spreizkeil (55) liegt, um den Verschluss der erwähnten Messer (52) auszulösen.

7. Apparatur nach Anspruch 1 dadurch gekennzeichnet, daß der Arbeitskopf aus einem Scherenkopf mit Messsern (57) besteht, angelenkt an einem einzigen Bolzen (58) und verbunden mit einem Paar von Armen (59), das gleichzeitig betätigt wird von der Stange (20), um den Scherenverscluss (57) der erwähnten Messer auszulösen.

8. Apparatur nach Anspruch 1 dadurch gekennzeichnet, daß der Arbeitskopf aus einem Stanzkopf (63) besteht, mit der Matrize (64) fest an der Flansch (42), ausgestattet mit einem Abzieher (67) und mit einem an die Stange befestigten Stempel (66).

9. Apparatur nach Anspruch 1 dadurch gekennzeichnet, daß der Arbeitskopf aus einem Spreizkopf (68) besteht, mit einem Körper (69) an die Flansch (42) gebunden und mit einem Paar Spreizarme an erwähntem Korper angelenkt und verbunden mit einem Paar von Armen (71), das gleichzeitig betätigt wird von der Stange (20), um die öffnung der erwähnten Arme (71) auszulösen.

10. Apparatur nach Anspruch 1 dadurch gekennzeichnet, daß die Bindung zwischen der Stange (20) und dem beweglichen Teil des Arbeitskopfes (43, 46, 51, 56, 63, 68) durch Direktunterstützung erzielt ist, der aktive Hub des erwähnten beweglichen Teils mittels Verrückung des Kolbens erzielt ist und der Rückhub durch elastische Mittel erzielt ist.

11. Apparatur nach Anspruch 1 dadurch gekennzeichnet, daß der bewegliche Teil der Arbeitskopfes stabile an der Stange (20) befestigt ist, die mit ihren axialen Bewegungen sowohl den aktiven Hub wie auch den Rückhub des erwähnten beweglichen Teils auslöst.

12. Apparatur nach Anspruch 11 dadurch gekennzeichnet, daß das bewegliche Teil des Arbeitskopfes an der Stange (20) verschraubt ist.

13. Apparatur nach Anspruch 10 dadurch gekennzeichnet, daß das Zylinderkolbenaggregat (18, 19) auf Einfachwirkung basiert und ausgestattet ist mit elastischen Organen (36), die, wenn die Pumpe (7) nicht tätig ist, den Kolben (18) in der Endlaufrühestellung halten.

14. Apparatur nach Anspruch 10 dadurch gekennzeichnet, daß der Kolbenkopf (19) mit wenigstens einem Durchgangsloch (34) ausgestattet ist, das schliessbar durch ein Ventil (32) ist, das elastisch in geöffneter Kondition gehalten ist, wenn keine anderen externen Beanspruchungen auftreten, und in geschlossener Kondition gehalten ist, wenn der Kolben (19) sich in hinterer Endlaufstellung befindet und/oder wenn der Druck in der Zylinderkammer (18) oberhalb des Kolbens (19) um einen festgelegten Wert den Druck in der selben Zylinderkammer (18) unterhalb des Kolbens (19) übersteigt.

15. Apparatur nach Anspruch 14 dadurch gekennzeichnet, daß das Ventil (32) ein Pilzventil ist, mit dem Kopf auf die Durchgangslöcher (34) gerichtet ist, im Teil der Zylinderkammer (18) oberhalb des Kolbens (19) gelagert ist und mit der Stange, länger als die axiale Länge der erwähnten Kolbens (19), an erwähntes Ventil (32) eine geeignet Feder (35) assoziiert ist, um bei Ruhestellung die öffnung das Durchgangslochs (34) zu betätigen.

16. Apparatur nach Anspruch 13 dadurch gekennzeichnet, daß am Zylinderkolbenaggregat (18, 19) ein Sicherheitsventil (25, 26, 27) assoziiert ist, das in einer Verbindungsleitung (28) zwischen den beiden Teilen der Zylinderkammer (18) ober- und unterhalb des Kolbens (19) liegt, um den Durchgang des Betriebsöls von der Position unterhalb in die Position oberhalb zu verhindern, aber den gegensätzlichen Durchgang zulässt, wenn ein festgelegter Wert der Differenz der Drucke überschritten ist.

17. Apparatur nach Anspruch 16 dadurch gekennzeichnet, daß das Sicherheitsventil einen Verschluss (25) umfasst, der elastisch von einer Feder (26) in geschlossener Stellung der erwähnten Leitung (18) gehalten wird.

## Revendications

1. Un appareil portable multi-usages, avec une unité de base comportant, à l'intérieur du corps de la machine (1) muni d'une poignée (2);

un moteur (3),

une pompe hydraulique (7) entraînée par ledit moteur (3),

un piston cylindrique (18, 19) raccordé à ladite pompe (7) par au moins un tuyau (14, 29) pour l'alimentation unidirectionnelle du liquide de travail, la tige (20) du piston (19) sortant dudit corps (1),

un réservoir (5) pour alimenter la pompe en liquide travail,

au moins un tuyau (30) raccordant directement ledit cylindre (18) au dit réservoir (5), uni d'un vanne (31) réglable de l'extérieur,

une série de têtes interchangeables (43, 46, 51, 56, 63, 68), chacune d'elles se composant d'une structure de support, munie d'une bride (42) adaptable sur une bride similaire (4) vue dans ledit corps de la machine (1) et entourant l'ouverture laissant passer la tige (20), et une partie active, mobile par rapport à la structure support et actionnée par ladite tige (20), et qui se caractérisé par le fait que celle-ci comporte un élément annulaire (40) formé par au-moins deux parties séparées munies de bords qui s'adaptent simultanément avec les rainures correspondantes des deux brides (4, 42) respectivement prévues sur le corps (1) et les têtes de travail (43, 46, 51, 56, 63, 68).

2. Appareil conforme à la revendication 1 caractérisé en ce que la tête de travail se compose d'une coupeuse avec lame fixe (45), solidaire avec la portion de la tête munie d'une bride (42) et d'une lame mobile (45') solidiaire avec la tige (20) du piston (19).

3. Appareil conforme à la revendication caractérisé en ce que la tête se compose d'une cintreuse (46) munie d'un gabarit fixe (47) fixé à la partie de la tête munie de la bride (42) et un contre-gabarit (48) mobile le long de ladite portion et fixé à la tige (20) du piston (19).

4. Appareil conforme à la revendication 1 caractérisé en ce que la tête se compose d'une cintreuse (46) munie d'un contre-gabarit fixé à la portion de la tête munie de la bride (42) et un gabarit mobile le long de ladite portion et fixé à la tige (20) du piston (19).

5. Appareil conforme à la revendication 3 ou 4 caractérisé en ce que la contre-gabarit (48) de la cintreuse (46) est équipé de roulements de pliage (50).

6. L'appareil comme il est déclaré dans la description 1 se caractérisé par le fait que le tête se compose de cisailles (51) dont les lames coplanaires (52) sont articulées sur deux pivots, un coin d'écartement (55) placé entre les bras des lames (52) et actionnées par la tige (20) pour entraîner la fermeture des lames (52).

7. Appareil conforme a la revendication 1 caractérisé en ce que la tête se compose de cisailles dont les lames (57) sont articulées sur un axe (58) et raccordées à deux bras (59) qui sont actionnés simultanément par le tige (20) entraînant la fermeture des lames (57).

8. Appareil conforme à la revendication 1 caractérisé en ce que la tête se compose d'une tête poinconneuse (63) munie de sa matrice (64) solidaire avec la bride (42) et munie d'un extracteur (67) et un poinçon (66) fixé à la tige (20).

9. Appareil conforme a la revendication 1 caractérisé en ce que la tête de travail se compose d'une tête écarteuse (68), munie d'un corps (69) raccordé à la bride (42) et de deux bras écarteur (70) articulés sur ledit corps et articulés sur deux autres bras (71) qui sont actionnés simultanément par la tige (20) entraînant l'ouverture desdits bras (71).

10. Appareil conforme a la revendication 1 caractérisé en ce que le raccord entre la tige (20) et la partie mobile de la tête de travail (43, 46, 51, 56, 63, 66) est obtenu par leur contact direct, la course active de ces éléments étant provoquée par le déplacement du piston et le mouvement de retour obtenu par l'effet de ressort.

11. Appareil conforme a la revendication 1 caractérisé en ce que la tête mobile est fixée solidement à la tige (20) avec le déplacement duquel on obtient le mouvement d'aller et de retour de ladite partie en mouvement.

12. Appareil conforme à la revendication 11 caractérisé en ce que la partie mobile de la tête est vissée sur la tige (20).

13. Appareil conforme à la revendication 10 caractérisé en ce que le système à piston cylindrique (15, 19) est un système à action simple et qu'il est muni de dispositifs de ressort (3) qui lorsque la pompe (7) ne fonctionne pas, maintient le piston (19) en position de repos en fin de course.

14. Appareil conforme à la revendication 13 caractérisé en ce que le tête du piston (19) est munie d'au-moins un trou de passage (34) obturable par une soupape (32), maintenu en position ouverte par effet de ressort lorsqu'il n'y a pas d'autres forces extérieures, et maintenu en position fermée quand le piston (19) se trouve en position de fin de course arrière et/ou quand la pression dans la chambre (18) en amont du piston (19) dépasse une valeur préétablie de pression dans la chambre (15) en aval du piston (19).

15. Appareil conforme à la revendication 14 caractérisé en ce que la soupape (32) est une soupape en forme de champignon, dont la tête fait face aux trous de passage (34) situés dans la zone de la chambre (18) en amont du piston (19) et dont la tige a une longueur supérieure à l'épaisseur de la tête du piston (19), ladite soupape est munie d'un ressort (35) qui entraîne l'ouverture du trou de passage (34) quand le ressort est en position de repos.

16. Appareil conforme a la revendication 13 caractérisé en ce que le piston cylindrique (18, 19) est équipé d'une soupape de sécurité (25, 26, 27) fermant un tuyau (28) raccordant les deux parties de la chambre (18) en amont et en aval du piston (19) et qui empêche le passage de l'huile en aval vers la partie en amont, mais qui laisse passer l'huile dans le sens inverse quand la valeur établie de la différence de pression est dépassée.

17. Appareil conforme a la revendication 16 caractérisé en ce que la soupape de sécurité est munie d'un obturateur (28) maintenu par un ressort (26) quand le tuyau (18) est en position fermée.

EP 0 244 450 B1

FIG.1

FIG.3

FIG.4

FIG.5

FIG.6

FIG. 2

6 31 30 21    19    36    22    4  39    40    41

5

17  7    1    16 11 15   14 29 28 32 25   26  23 32   27   18 24 38   37 20

12

3

EP 0 244 450 B1

FIG. 7

FIG. 8

FIG. 9

FIG.10

FIG.11

FIG.12

3